# EUROPEAN PATENT SPECIFICATION

(11) **EP 1 110 150 B1**
(45) Date of publication and mention of the grant of the patent: **14.05.2008**
(21) Application number: 99942081.3
(22) Date of filing: 10.08.1999
(51) Int. Cl.: G06F 13/00

(54) **COMMUNICATING THE STATUS OF A PERIPHERAL DEVICE CONTROLLER TO A HOST PROCESSOR**
ANGABE DES STATUS EINER PERIPHERALEN KONTROLLVORRICHTUNG MIT EINEM GASTPROZESSOR
COMMUNICATION DE L'ETAT D'UN CONTROLEUR D'UNITES PERIPHERIQUES A UN PROCESSEUR CENTRAL

(30) Priority: 11.08.1998 US 96161 P; 09.08.1999 US 370566
(43) Date of publication of application: 27.06.2001
(73) Proprietor: S3 Graphics Co., Ltd., Grand Cayman (KY)
(72) Inventor: BROTHERS, John, W., Palo Alto, CA 94301 (US)
(74) Representative: Käck, Jürgen
(86) International application number: PCT/US1999/018152
(87) International publication number: WO 2000/010092

(56) References cited:
- US-A- 4 688 212
- US-A- 5 202 964
- US-A- 5 473 604
- US-A- 5 604 866

## Description

### FIELD OF THE INVENTION

This invention relates generally to computer systems, and more particularly, to communication of status of a peripheral device controller to a host processor.

### BACKGROUND OF THE INVENTION

Computer systems employ a variety of peripheral devices to perform specialized functions such as inputting and/or outputting data, storing data, and transmitting and/or receiving data to or from other computerized devices. Typically, each peripheral device has associated therewith a controller (herein termed a "device controller") which provides an interface between a Central Processing Unit (CPU) of the computer system and the peripheral device, and in some instances, off-loads certain processing tasks performed by the CPU. The CPU must monitor the status of the device controllers in the system to determine if the device controllers are able to accept additional commands and/or data from the CPU.

Status monitoring of the device controllers is typically performed in one of two ways. First, the CPU can periodically poll the status of a particular device controller to determine its status. Typically, the status of a device controller is stored in a register contained in the controller, and the register is periodically read by the CPU to determine the status of that device controller. Second, the device controller can generate an interrupt to the CPU whenever an event occurs requiring attention by the CPU. For example, if the device controller is unable to accept data, it can generate an interrupt to the CPU which may cause the CPU to read the status of a status register in the device controller.

Polling causes a high level of bus traffic because it requires data to be sent between the CPU and the peripheral device controller. This traffic is undesirable because it uses bus cycles that may be used for other operations. Additionally, CPU cycles are spent to periodically poll the status register of the device controller. Interrupts, similarly, generate bus traffic and require expenditure of CPU traffic when information from the status register in question is sent to the CPU. Moreover, interrupts experience latency from the time the interrupt occurs to the time it is actually processed by the CPU.

US4688212 discloses a central processor which is arranged to scan a plurality of ports for the purpose of receiving data or signaling information from a peripheral acting as an information source or for transmitting information to a peripheral addressed to receive that information. The processor selectively stores that information as an image of selected conditions at each port peripheral and the transmission of information between peripherals is accomplished on a timed schedule from the centrally located processor which uses the stored image to monitor local conditions at each peripheral without the need to specifically address each peripheral.

US5473604 discloses a system and method for controlling node congestion in a packet switching network by allowing the congested node to acquire control of transmission on the packet switching network and not relinquishing such control until the backlog of packets in the buffer has been removed. In response to the node's buffer reaching a predetermined occupancy level, the node requests from the network's arbiter for exclusive transmission rights on the network. When the node receives transmission rights, the node continues to process packets in the buffer. When the occupancy of the buffer reaches a second predetermined threshold, the node releases the transmission right, and thus permits other nodes to transmit packets to it (and to other nodes) again.

EP0526103 discloses an apparatus and method for sharing traffic among a plurality of automatic call distributor (ACD) sites serving a customer. Each ACD site has a main queue for storing incoming calls to the ACD, and a group of overflow queues for storing calls rerouted from one of the other ACD sites. Before rerouting a call to an alternate site, the overflow queue for that site is checked; if it has an excessive number of entries, calls will not be rerouted to that alternate site. If one of the ACD sites is not appropriately equipped with overflow queues for different sites and an appropriate program for steering calls, that ACD site can route its overflow traffic via one of the ACD sites, designated as a mother node, for distributing overflow from the one site to others.

Therefore, there is a need for an improved system and method that allows status information regarding peripheral device controller(s) to be communicated to a CPU. More specifically, there is a need for a system and method that communicates the status of a peripheral device to a host CPU with minimum impact on bus traffic and CPU time.

### SUMMARY OF THE INVENTION

The present invention overcomes the deficiencies and limitations of the prior art with a novel apparatus and method for communicating the status of a peripheral device to the central processing unit (CPU). Embodiments employing the principles of the present invention cause automatic status updates to occur from a peripheral device controller to a CPU upon occurrence of a predetermined event by writing status directly to a location in the system memory. By writing status to the system memory, embodiments employing the principles of the present invention advantageously avoid any unnecessary bus transactions to report device controller status and thus reduce impact on bus traffic and CPU cycles.
According to an aspect of the present invention, there is provided a computer system comprising:
a processing unit;
a peripheral device controller coupled to the processing unit;
a peripheral device coupled to the peripheral device controller; and characterised by:
   a system memory coupled to the processing unit and the peripheral device controller, a portion of the system memory comprising a status memory storing a peripheral device controller status signal, and the status memory comprises a cacheable portion of the system memory; and a cache memory coupled to the processing unit; and wherein the peripheral device controller automatically updates the contents of the status memory independent of the processing unit.
According to another aspect of the present invention, there is provided a method for communicating peripheral device controller status information in a computer system having a processor, a memory, and a peripheral device controller comprising a command memory, a status monitoring unit and a status transmission unit, comprising the steps of:
monitoring the operational state of the peripheral device controller with the status monitoring unit;
automatically writing a status signal into the system memory with the status transmission unit;
allocating the cache memory within the system memory for storing the status signal; and
storing the status signal in the cache memory.

Thus, during operation of the system, the CPU specifies a location in the system memory where status information will be automatically posted whenever the queue reaches a predetermined state, for example a high watermark value, indicating that the queue is full, or a low watermark value, indicating that the queue is not full. The status monitoring unit checks the status of the command memory to determine whether the operational state of the command memory has reached a target state and transmits a signal to the status transmission unit. The transmission unit then performs a status write to the system memory indicating the status of the command memory of the peripheral device controller.
Advantageously, the CPU does not have to use its own cycles or the system bus cycles to determine peripheral device controller status.

When the CPU checks the status of the peripheral device, the CPU is able to check its cache rather than system memory. If the cached memory location is valid, the CPU reads the status of the peripheral from the cached location. Since the CPU reads only a cached location it does not generate a bus transaction or system memory bus transaction to monitor status. If the cached memory location is invalid, the CPU reads the status from the system memory and stores the status information in its cache.

Storage of the status information in a cached memory location advantageously reduces the memory bandwidth required for the CPU to determine status information. When a peripheral device controller updates status in system memory, the first status read from memory by the CPU will cause a cache miss. Thereafter, status reads can be performed from the cache until the next status update by the peripheral device controller. These and other features and advantages may be better understood by considering the following detailed description of certain preferred embodiments of the invention. In the course of this description, reference will be made to the attached drawings.

### BRIEF DESCRIPTION OF THE DRAWINGS

Figure 1 is a high level block diagram of a computer system employing the principles of the present invention.
Figure 2 is a high level block diagram of a computer system comprising multiple peripheral device controller subsystems in accordance with the present invention.
Figure 3 is a flowchart of a set up procedure performed by a preferred embodiment.
Figure 4 is a flowchart showing steps executed by a preferred embodiment.
Figure 5 is a block diagram showing further details of the peripheral device controller of Figure 1.

### DETAILED DESCRIPTION OF THE PREFERRED EMBODIMENTS

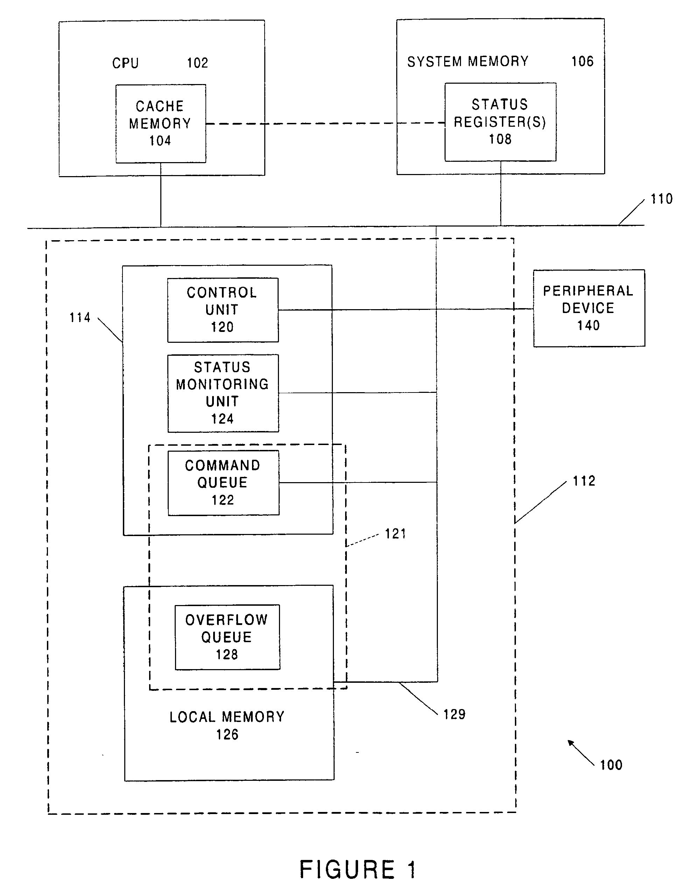

Figure 1 is a block diagram of a preferred embodiment of a computer system 100 for efficiently communicating peripheral device status, constructed in accordance with the present invention. The computer system 100 comprises a central processing unit (CPU) 102 having a conventional cache memory 104 associated therewith; a system memory 106 in which a set of cacheable storage locations implement at least one status register or status memory 108; a peripheral device controller subsystem 112; the subsystem 112 comprising a peripheral device controller 114 coupled to an associated local memory 126; and a peripheral device 140. Each of the CPU 102, the system memory 106, and the peripheral device controller subsystem 112 is coupled to a common bus 110, while the peripheral device 140 is coupled to the peripheral device controller subsystem 112.

The CPU 102 is preferably a conventional microprocessor, such as a Pentium II (Intel Corporation, Santa Clara, CA) or generally-equivalent processor. The cache memory 104 provides data retrieval at a rate significantly faster than that provided by the system memory 106, in a manner readily understood by those skilled in the art. The system memory 106 comprises a Random Access Memory (RAM), portions of which have been defined as cacheable in a conventional manner.

The peripheral device controller 114 manages interactions between the peripheral device 140 and other system elements. The scope of the present invention is such that the peripheral device controller 114 may be any type of input/output controller, and the peripheral device 140 may be any corresponding type of input/output device. For example, the peripheral device controller 114 may be a disk drive controller, or a network interface controller. In the preferred embodiment, the peripheral device controller 114 comprises a graphics controller such as a Savage3D graphics processor (S3 Incorporated, Santa Clara, CA), and the peripheral device 140 comprises a conventional display device. In such an embodiment, the local memory 126 takes the form of a conventional frame buffer memory used to store graphical images and other information required by the graphics controller to render images on the display device. Device controller 114, operating according to the principles of the present invention, enhances the performance of functions executed by the system by allowing the device controller 114 to operate in parallel with the CPU. By reducing the movement of data on the bus for determining status, the bus becomes available for other uses thereby improving the overall function and efficiency of the system.

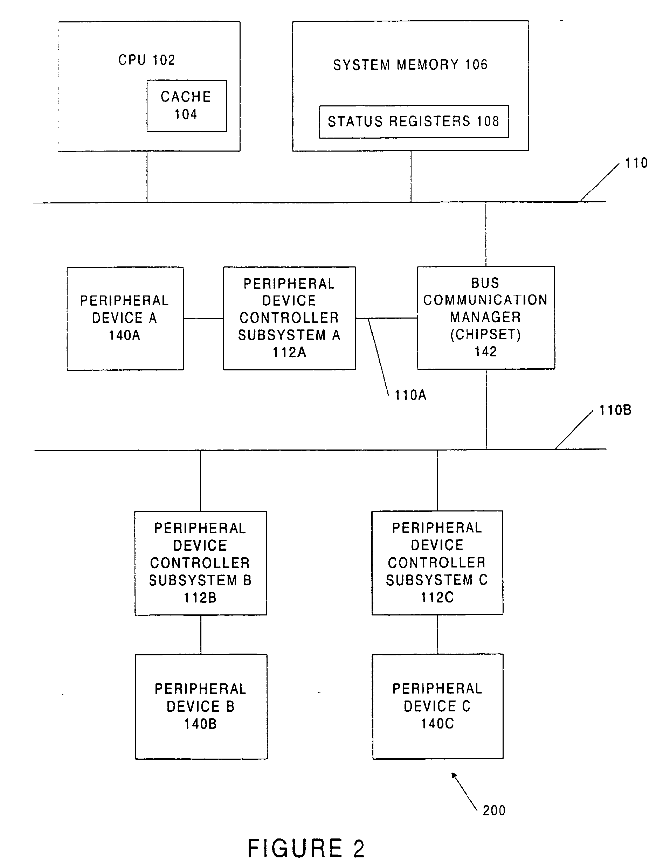

Since the teachings of the present invention are applicable to any type of input/output controller and corresponding input/output device, the bus 110 is of a type that supports communication protocols appropriate to the particular input/output controller and input/output device employed. In the preferred embodiment, the bus 110 is an Accelerated Graphics Port (AGP). Those skilled in the art will recognize that the bus 110 could be a Peripheral Component Interconnect (PCI) bus or other type of communication coupling in an alternate embodiment. In another alternate embodiment, bus 110 may take the form of two buses, as shown in Figure 2. In this embodiment, bus 110A is an AGP, and Bus 110B is a PCI coupled to bus 110A through the graphics chipset 142.

The teachings of the present invention are also applicable to multiple peripheral device controllers and corresponding peripheral devices in a computer system. Figure 2 is a block diagram illustrating a computer system 200 comprising multiple peripheral device controller subsystems 112A, 112B, and 112C operating in accordance with the present invention. Subsystem 112A is coupled to CPU 102, a system memory 106, and graphics chipset 142 via bus 110A and bus 110. Subsystems 112B and 112C are coupled to graphics chipset 142 via bus 110B. Although the present invention will be further described in terms of a single peripheral device controller, those skilled in the art will realize that the principles of the present invention could be applied to a system comprising multiple peripheral device controllers as shown in Figure 2.

Referring to Figure 1, peripheral device controller subsystem 112 comprises a command memory 121, which in a preferred embodiment comprises command queue 122 and overflow queue 128. Command memory 121 stores commands generated by the CPU 102 for controlling the operation of the peripheral device 140. In such an embodiment, overflow queue 128 is only used when command queue 122 is full. Status monitoring unit 124 is a state machine which monitors the state of and stores information indicative of the state of the peripheral device controller 114. In a preferred embodiment, status monitoring unit 124 stores information indicative of the state of the command memory 121 and can perform bus-master write data exchanges to the system memory 106. Status register 108 stores information indicative of the state of the peripheral device controller 114. In a preferred embodiment, the status monitoring unit 124 and the status register 108 store the status of the overflow queue 128.

During operation of the computer system 100, the CPU 102 generates commands and data to control operation of the peripheral device 140. The commands and data are transferred via the bus 110 to the peripheral device controller 114 and stored in the command memory 121. As previously stated, in a preferred embodiment the commands are initially stored in the command queue 122. When the command queue 122 is full, additional commands are stored in the overflow queue 128. In a preferred embodiment, when the overflow queue 128 reaches a predetermined state, such as when the queue fills beyond a high watermark value, which indicates either that the queue has reached full capacity or is close to full capacity, or empties below a low watermark value, which indicates that the queue is empty or is close to being empty, the peripheral device controller 114 causes an update to status register 108 in system memory 106 to store the status of the queue in the status register 108. Typically, changing the contents of status register 108, which is preferably stored in a cacheable memory location, will cause invalidation of a corresponding entry (if one exists) in cache 104. Thus, when the CPU 102 tries to determine the status of the peripheral device controller 114, it will read the new status data from the system memory 106 and cause the new status data to be stored in cache memory 104. Subsequently, when the CPU reads status register 108 to determine status of controller 114, the read will be performed at high speed from the cache 104.

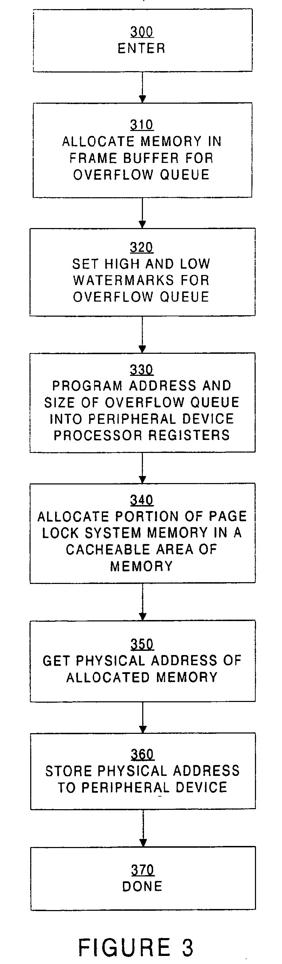

Figure 3 shows the steps taken in a preferred embodiment to set up the computer system 100 to operate in accordance with a preferred embodiment of the present invention. Preferably, the steps shown in Figure 3 are implemented by way of a device driver which is executed under control of a Basic Input-Output System-(BIOS) program typically used in conventional computer systems. The procedure is entered at 300. Memory is allocated (310) in the local memory 126 for overflow queue 128. A predetermined or target state of the command memory 121 is set (330). For example, in a preferred embodiment, high and low watermarks as previously described are set for the overflow queue 128. The address and size of the overflow queue 128 is then programmed (330) into dedicated registers located within the peripheral device controller 114. A portion of the page lock system memory is allocated in a cacheable area of memory for storage of status register 108. The physical address of the allocated memory (status register 108) is then obtained (350). Finally, the physical address of the status register 108 is stored (360) to the peripheral device controller 114.

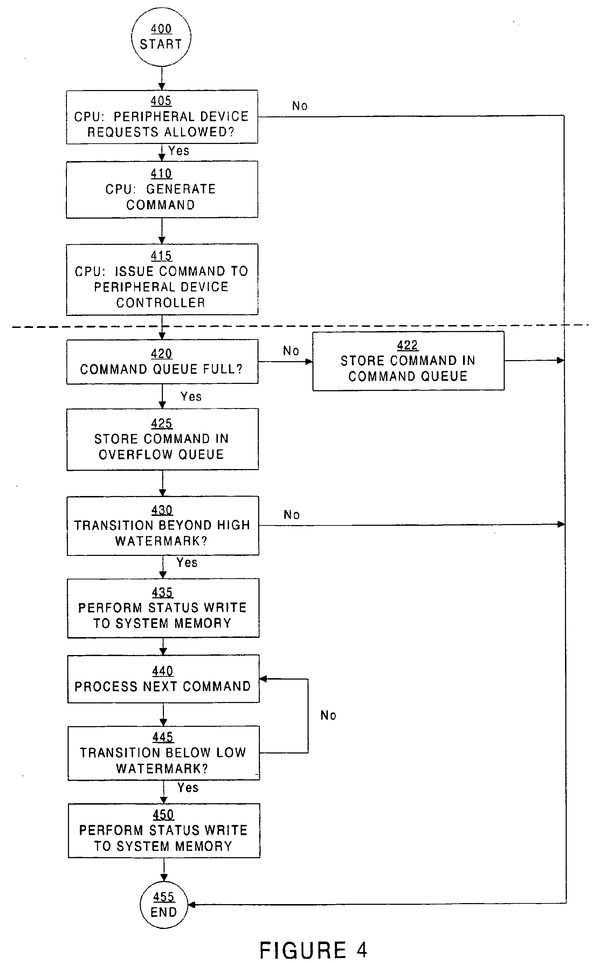

After the set up steps shown in Figure 3, a preferred embodiment operates in accordance with the steps shown in Figure 4. Steps 405, 410, and 415 are performed under control of CPU 102 and the subsequent steps shown below the dotted line of Figure 4 are performed under control of the peripheral device controller 114. The procedure is entered at 400 and the CPU first determines (405) whether peripheral device requests are allowed. If yes, then the CPU generates (410) a command and issues the command (415) to the peripheral device controller 114. If the command queue 122 is not full, then the controller 114 causes the received commands to be stored (422) in the command queue 122. If the command queue is full, then the controller 114 causes the commands to be stored (425) in overflow queue 128. The status monitoring unit 124 then checks if the operational state of the device controller 114 corresponds to a target state. In other words, the status monitoring unit 124 checks whether the overflow queue 128 is above a high watermark or below a low watermark. If the overflow queue 128 is filled beyond the high watermark value, then controller 114 causes status register 108 in system memory 106 to be updated (435) to indicate that the overflow queue 128 is full. The device controller 114 then processes (440) the next command in the command memory 121. The overflow queue 128 is again checked (445) to determine whether it is below the low watermark value. If the overflow queue 128 is below the low watermark value, then device controller 114 causes status register 108 in system memory 106 to be updated (450) to indicate that further writes of data and commands to controller 114 may proceed. If the overflow queue 128 is not below the low watermark value, the device controller 114 processes (440) the next command in the overflow queue 128.

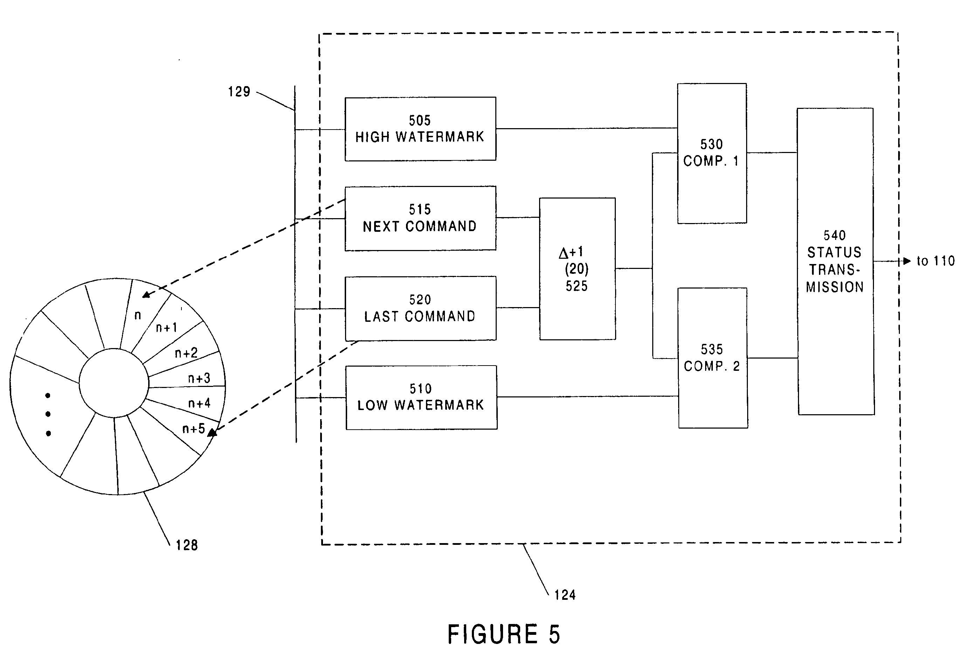

Figure 5 is a block diagram showing further details of a preferred embodiment of status monitoring unit 124 and the overflow queue 128. Figure 5 shows overflow queue 128 as a queue containing *n*+*5* commands generated by CPU 102. Overflow queue 128 may be implemented as a stack or list, or other data storage configuration appropriate for the demands of the environment. Commands generated by CPU 102 prior to command *n* are stored in the command queue 122. Additional commands generated by CPU 102, command *n+6* for example (not shown), are placed in queue 128. The status monitoring unit 124 comprises a high watermark (not shown) register 505, a low watermark register 510, a next command register 515, a last command register 520, a queue level indicator 525, a queue status determiner unit 530; and a status transmission unit 540. In a preferred embodiment, high watermark register 505 contains a value indicating that the queue has reached full capacity or is close to full capacity, and low watermark register 510 contains a value indicating that the queue has a predetermined fill level which will allow the queue to store additional commands. The status transmission unit 540 is coupled to the queue status determiner 530. The queue level indicator 525 contains information indicative of the number of commands stored in the queue 128, specifically the queue level. The high watermark and low watermark registers 505, 510 contain addresses of a predetermined address of the command memory 121 which correspond to a particular state of the command memory 121. For example, in the preferred embodiment, the high watermark register 505 contains the high watermark value which is a predetermined address of the queue 128 which corresponds to the queue 128 being full or almost full. The low watermark register 510 contains the low watermark value which is a predetermined address of the queue 128 which corresponds to the queue being able to accept additional commands. As explained above in connection with Figure 3, the predetermined state values are set at system start-up and thus are changeable. Moreover, the principles of the present invention are applicable to tracking and communicating status of multiple predetermined state registers wherein each predetermined state register contains a value corresponding to a state of the particular peripheral device controller. The queue status determiner unit 530 determines whether the queue 128 has reached a predetermined state. More specifically, the queue status determiner unit 530 compares the queue level indicator 525 with the value in the high watermark register 505 and the low watermark 510 to determine whether the queue 128 has reached either the first or second predetermined state. The queue status determiner unit 530 determines whether the queue 128 has reached either predetermined state value by comparing the address in the queue level indicator 525 with the addresses in the high watermark register 505 and the low watermark register 510. When the queue status determiner unit 530 determines that the queue 128 has reached a predetermined value, the queue status determiner unit 530 transmits a status update signal to the status transmission unit 540. The status transmission unit 540 responds to the status update signal by causing a status update to the system memory 106 to update status register 108 with the status of the queue 128. For example, in a preferred embodiment, when the queue 128 reaches the high watermark value, the status transmission unit 540 causes a status update over bus 110 to the system memory indicating that the queue 128 has reached a predetermined full level and that commands cannot be transferred to the queue 128. When the queue 128 reaches the low watermark value the status transmission unit 540 causes a status update over bus 110 to the system memory indicating that the queue 128 has reached a predetermined empty level and that commands and data can be transferred to the queue 128.

## Claims

1. A computer system, comprising:
a processing unit;
a peripheral device controller coupled to the processing unit; and
a peripheral device coupled to the peripheral device controller;
**characterized in that** the computer system comprises:
a system memory coupled to the processing unit and the peripheral device controller, a portion of the system memory comprising a status memory storing a peripheral device controller status signal, and the status memory comprises a cacheable portion of the system memory; and
a cache memory coupled to the processing unit; and
wherein the peripheral device controller automatically updates the contents of the status memory independent of the processing unit.

2. The system of claim 1, wherein the peripheral device controller comprises:
a command memory for storing commands received from the processing unit;
a control unit for executing the commands, the control unit coupled to the command memory; and
a status monitoring unit for determining whether an operational state of the peripheral device controller corresponds to a target state, the status monitoring unit coupled to the command memory and the control unit; and
a status transmission unit responsive to the status monitoring unit, for selectively and automatically writing the peripheral device controller status signal into the system memory when the operational state corresponds to the target state.

3. The system of claim 1, wherein the target state comprises an increase in a number of commands stored in the command memory beyond a high watermark value.

4. The system of claim 1, wherein the target state comprises a decrease in a number of commands stored in the command memory beyond a low watermark value.

5. The system of claim 1, wherein the target state comprises a decrease in a number of commands stored in the command memory beyond a low watermark value after a number of commands stored in the command memory most recently exceeded a high watermark value.

6. The system of claim 1, wherein the command memory comprises:
a first queue; and
an overflow queue for storing commands when the first queue is full.

7. The system of claim 1, wherein the peripheral device controller comprises a graphics processor.

8. A method for communicating peripheral device controller status information in a computer system having a cache memory, a processor, a memory, and a peripheral device controller comprising a command memory, a status monitoring unit and a status transmission unit, comprising the step of:
monitoring the operational state of the peripheral device controller with the status monitoring unit;
automatically writing a status signal into the system memory with the status transmission unit;
allocating the cache memory within the system memory for storing the status signal; and
storing the status signal in the cache memory.

9. The method of claim 8, wherein the monitoring step comprises determining whether an operational state of the peripheral device controller matches a target state.

10. The method of claim 9, wherein the target state comprises an increase in a number of commands stored in the command memory beyond a high watermark value.

11. The method of claim 9, wherein the target state comprises a decrease in a number of commands stored in the command memory beyond a low watermark value.

12. The method of claim 9, wherein the target state comprises a decrease in a number of commands stored in the command memory beyond a low watermark value after a number of commands stored in the command memory most recently exceeded a high watermark value.

## Patentansprüche

1. Computersystem mit:
einer Verarbeitungseinheit;
einer Peripheriegerät-Steuereinheit, die mit der Verarbeitungseinheit gekoppelt ist; und
einem Peripheriegerät, das mit der Peripheriegerät-Steuereinheit gekoppelt ist;
**dadurch gekennzeichnet, dass** das Computersystem aufweist:
einen Systemspeicher, der mit der Verarbeitungseinheit und der Peripheriegerät-Steuereinheit gekoppelt ist, wobei ein Teil des Systemspeichers einen Zustandsspeicher aufweist, der ein Peripheriegerät-Steuereinheits-Zustandssignal speichert, und der Zustandsspeicher einen cachefähigen Teil des Systemspeichers aufweist; und
einen Cachespeicher, der mit der Verarbeitungseinheit gekoppelt ist; und
wobei die Peripheriegerät-Steuereinheit automatisch den Inhalt des Zustandsspeichers unabhängig von der Verarbeitungseinheit aktualisiert.

2. System nach Anspruch 1, wobei die Peripheriegerät-Steuereinheit aufweist:
einen Befehlsspeicher zum Speichern von Befehlen, die von der Verarbeitungseinheit empfangen werden;
eine Steuerungseinheit zum Ausführen der Befehle, wobei die Steuerungseinheit mit dem Befehlsspeicher gekoppelt ist; und
eine Zustandsüberwachungseinheit zum Feststellen, ob ein Betriebszustand der Peripheriegerät-Steuereinheit einem Zielzustand entspricht, wobei die Zustandsüberwachungseinheit mit dem Befehlsspeicher und der Steuerungseinheit gekoppelt ist; und
eine Zustandsübertragungseinheit, die auf die Zustandsüberwachungseinheit reagiert, um selektiv und automatisch das Peripheriegerät-Steuereinheits-Zustandssignal in den Systemspeicher zu schreiben, wenn der Betriebszustand dem Zielzustand entspricht.

3. System nach Anspruch 1, wobei der Zielzustand eine Erhöhung einer Anzahl von Befehlen, die im Befehlsspeicher gespeichert sind, über einen Hochstandswert hinaus aufweist.

4. System nach Anspruch 1, wobei der Zielzustand eine Verringerung einer Anzahl von Befehlen, die im Befehlsspeicher gespeichert sind, über einen Tiefstandswert hinaus aufweist.

5. System nach Anspruch 1, wobei der Zielzustand eine Verringerung einer Anzahl von Befehlen, die im Befehlsspeicher gespeichert sind, über einen Tiefstandswert hinaus, nachdem eine Anzahl von Befehlen, die im Befehlsspeicher gespeichert sind, jüngst einen Hochstandswert überschritten hat, aufweist.

6. System nach Anspruch 1, wobei der Befehlsspeicher aufweist:
eine erste Warteschlange; und
eine Überlaufwarteschlange zum Speichern von Befehlen, wenn die erste Warteschlange voll ist.

7. System nach Anspruch 1, wobei die Peripheriegerät-Steuereinheit einen Graphikprozessor aufweist.

8. Verfahren zur Übertragung von Peripheriegerät-Steuereinheits-Zustandsinformationen in einem Computersystem mit einem Cachespeicher, einem Prozessor, einem Speicher und einer Peripheriegerät-Steuereinheit mit einem Befehlsspeicher, einer Zustandsüberwachungseinheit und einer Zustandsübertragungseinheit, mit dem Schritt:
Überwachen des Betriebszustandes der Peripheriegerät-Steuereinheit mit der Zustandsüberwachungseinheit;
automatisches Schreiben eines Zustandssignals in den Systemspeicher mit der Zustandsübertragungseinheit;
Zuordnen des Cachespeichers innerhalb des Systemspeichers zum Speichern des Zustandssignals; und
Speichern des Zustandssignals im Cachespeicher.

9. Verfahren nach Anspruch 8, wobei der Überwachungsschritt das Feststellen, ob ein Betriebszustand der Peripheriegerät-Steuereinheit einem Zielzustand entspricht, aufweist.

10. Verfahren nach Anspruch 9, wobei der Zielzustand eine Erhöhung einer Anzahl von Befehlen, die im Befehlsspeicher gespeichert sind, über einen Hochstandswert hinaus aufweist.

11. Verfahren nach Anspruch 9, wobei der Zielzustand eine Verringerung einer Anzahl von Befehlen, die im Befehlsspeicher gespeichert sind, über einen Tiefstandswert hinaus aufweist.

12. Verfahren nach Anspruch 9, wobei der Zielzustand eine Verringerung einer Anzahl von Befehlen, die im Befehlsspeicher gespeichert sind, über einen Tiefstandswert hinaus, nachdem eine Anzahl von Befehlen, die im Befehlsspeicher gespeichert sind, jüngst einen Hochstandswert überschritten hat, aufweist.

## Revendications

1. Système informatisé comprenant :
une unité de traitement ;
un contrôleur de dispositifs périphériques relié à l'unité de traitement ; et
un dispositif périphérique relié au contrôleur de dispositifs périphériques ;
**caractérisé en ce que** le système informatisé comprend :
une mémoire système reliée à l'unité de traitement et au contrôleur de dispositifs périphériques, une partie de la mémoire du système comprenant une mémoire d'état stockant un signal d'état de contrôleur de dispositifs périphériques, la mémoire d'état comprenant une partie de la mémoire du système qui est adaptée à une mise en cache ; et
une mémoire cache reliée à l'unité de traitement ; et
dans lequel le contrôleur de dispositifs périphériques actualise automatiquement le contenu de la mémoire d'état indépendamment de l'unité de traitement.

2. Système selon la revendication 1 dans lequel le contrôleur de dispositifs périphériques comprend :
une mémoire des commandes destinée au stockage des commandes reçues de l'unité de traitement ;
une unité de commande destinée à exécuter les commandes, l'unité de commande étant reliée à la mémoire des commandes ; et
une unité de surveillance d'état destinée à déterminer si un état de fonctionnement du contrôleur de dispositifs périphériques correspond à un état cible, l'unité de surveillance d'état étant reliée à la mémoire des commandes et à l'unité de commande ; et
une unité de transmission d'état sensible à l'unité de surveillance d'état, pour écrire de façon sélective et automatique le signal d'état du contrôleur de dispositifs périphériques dans la mémoire du système lorsque l'état opérationnel correspond à l'état cible.

3. Système selon la revendication 1 dans lequel l'état cible comprend une augmentation d'un certain nombre de commandes stockées dans la mémoire des commandes au-delà d'une valeur de filigrane élevée.

4. Système selon la revendication 1 dans lequel l'état cible comprend une diminution d'un certain nombre de commandes stockées dans la mémoire des commandes au-delà d'une valeur de filigrane faible.

5. Système selon la revendication 1 dans lequel l'état cible comprend une diminution d'un certain nombre de commandes stockées dans la mémoire des commandes au-delà d'une valeur de filigrane faible après qu'un certain nombre des commandes stockées en dernier dans la mémoire des commandes a dépassé une valeur de filigrane élevée.

6. Système selon la revendication 1 dans lequel la mémoire des commandes comprend :
une première file d'attente ; et
une file d'attente de trop-plein destinée à stocker les commandes lorsque la première file d'attente est pleine.

7. Système selon la revendication 1 dans lequel le contrôleur de dispositifs périphériques comprend un processeur graphique.

8. Procédé de communication d'informations d'état d'un contrôleur de dispositifs périphériques dans un système informatisé comportant une mémoire cache, un processeur, une mémoire et un contrôleur de dispositifs périphériques comprenant une mémoire des commandes, une unité de surveillance d'état et une unité de transmission d'état, le procédé comprenant les étapes consistant à :
surveiller l'état de fonctionnement du contrôleur de dispositifs périphériques avec l'unité de surveillance d'état ;
écrire automatiquement un signal d'état dans la mémoire du système avec l'unité de transmission d'état ;
allouer la mémoire cache dans la mémoire du système pour stocker le signal d'état ; et
stocker le signal d'état dans la mémoire cache.

9. Procédé selon la revendication 8 dans lequel l'étape de surveillance consiste à déterminer si un état de fonctionnement du contrôleur de dispositifs périphériques correspond à un état cible.

10. Procédé selon la revendication 9 dans lequel l'état cible comprend une augmentation d'un certain nombre de commandes stockées dans la mémoire des commandes au-delà d'une valeur de filigrane élevée.

11. Procédé selon la revendication 9 dans lequel l'état cible comprend une diminution d'un certain nombre de commandes stockées dans la mémoire des commandes au-delà d'une valeur de filigrane faible.

12. Procédé de la revendication 9 dans lequel l'état cible comprend une diminution d'un certain nombre de commandes stockées dans la mémoire des commandes au-delà d'une valeur de filigrane faible après qu'un certain nombre des commandes stockées en dernier dans la mémoire des commandes a dépassé une valeur de filigrane élevée.
